(19) Europäisches Patentamt
European Patent Office
Office européen des brevets

(11) Publication number: **0 145 305 B1**

(12) **EUROPEAN PATENT SPECIFICATION**

(45) Date of publication of patent specification: **05.02.92**

(51) Int. Cl.5: **B01D 71/68**, B01D 61/02, B01D 61/14, C08L 81/06, C08G 75/23, C08G 65/48, C08J 3/11, C02F 1/44

(21) Application number: **84307823.9**

(22) Date of filing: **12.11.84**

The file contains technical information submitted after the application was filed and not included in this specification

(54) **Membranes.**

(30) Priority: **23.11.83 GB 8331198**

(43) Date of publication of application: **19.06.85 Bulletin 85/25**

(45) Publication of the grant of the patent: **05.02.92 Bulletin 92/06**

(84) Designated Contracting States: **AT BE CH DE FR GB IT LI LU NL SE**

(56) References cited:
**EP-A- 0 008 894**
**FR-A- 2 138 333**
**FR-A- 2 266 532**
**US-A- 3 875 096**

**AM. CHEM. SOC. SYMPOSIUM SERIES 153, SYNTHETIC MEMBRANES, vol. 1, 1981, pages 327-350, edited by A.F. Turbak; D.R. LLOYD et al.: "Poly(aryl ether) membranes for reverse osmosis"**

**IDEM**

(73) Proprietor: **IMPERIAL CHEMICAL INDUSTRIES PLC**
**Imperial Chemical House, Millbank**
**London SW1P 3JF(GB)**

(72) Inventor: **Hann, Richard Anthony**
**5, Maling Close**
**Frodsham Cheshire WA6 6AY(GB)**
Inventor: **Holmes, David Robert**
**50, Weaver Road**
**Frodsham Cheshire(GB)**

(74) Representative: **Parr, Ronald Edward et al**
**Imperial Chemical Industries PLC Legal Department: Patents PO Box 6**
**Welwyn Garden City, Hertfordshire AL7 1HD(GB)**

EP 0 145 305 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to membranes, more particularly to asymmetric semi-permeable membranes, materials used for the production of such membranes, processes for the production of such membranes and the use of the membranes for the treatment of solutions and suspensions.

Membranes which are useful in separation processes such as ultrafiltration and reverse osmosis may be prepared from polymeric materials. Asymmetric semi-permeable membranes, which can be used for reverse-osmosis, can be prepared by casting a solution of a film-forming ion-exchange material on a support and then coagulating the film using a non-solvent for the ion-exchange material. Asymmetric semi-permeable membranes are characterised by having a thin dense layer which functions as the active layer of the membrane and a thicker porous layer which functions as a reinforcing support for the active layer.

British Patent Specification No. 1 258 851 discloses sulphonated polyarylethersulphones having a specified structure. These materials are disclosed as being ion exchange resins and as being suitable for the production of membranes for a number of applications including electrodialysis, fuel cell applications, osmosis and reverse osmosis. European Patent Specification No. 8894 discloses alternative sulphonated polyarylethersulphones which may be prepared by a simple and readily controlled sulphonation technique and these materials also may be used to produce membranes for desalination and other processes. The use of sulphonated polyarylethersulphones as membranes for such processes is disclosed also in FR-A- 2 266 532, FR-A- 2 138 333 and US-A- 3 875 096. Sulphonated polyarylethersulphones are also referred to herein as "sulphonated polysulphones".

In a membrane used for reverse osmosis, a combination of high salt rejection at a high water flux is commercially very desirable but is difficult to achieve. Generally it is found that a membrane giving a high salt rejection provides only a low water flux and that a membrane giving a high water flux provides only a low salt rejection.

Furthermore, it is desirable for the membrane to have a good resistance to attack by the constituents of the liquid being treated, since this minimises the time required to replace deteriorated membranes. If the membrane does not have the required resistance, it is necessary to subject the liquid to a pretreatment to remove the harmful constituents, for example acid, alkali or chlorine. Such pretreatments are undesirable since they add to the cost of the total treatment process.

It has now been found according to the present invention that asymmetric membranes having improved resistance to aggressive materials such as acid and alkali can be obtained using particular sulphonated polysulphones in the form of their divalent salts.

According to a first aspect of the present invention there is provided an asymmetric semi-permeable membrane wherein the support layer and the active layer are both formed from the same sulphonated polyarylethersulphone and wherein the membrane has a salt rejection and flux which are such that the ratio:

$$\frac{\text{Flux (in m. day}^{-1}\text{)}}{\text{(100 - \% salt rejection)}}$$

has a value of at least 0.05 when the salt rejection and flux are determined in a reverse osmosis cell using a 0.2% by weight aqueous solution of sodium chloride at a pressure of 40 bar and a temperature of 25°C.

characterised in that the sulphonated polyarylethersulphone comprises repeat units of the formula:

$$\text{I} \qquad \left[ -(Ph - O)_m - Ph - SO_2 - \right]$$

wherein

Ph is a phenylene ring and at least some of the groups Ph are sulphonated.

m is 1 or 2 and the value of m can differ along the polymer chain; and

the sulphonated polyarylethersulphone is in the form of a divalent metal salt.

The phenylene rings or residues of the sulphonated polysulphones used in the present invention are preferably para-phenylene. With reference to the value of m, although the value may be one or two, we have produced particularly satisfactory membranes using a copolymer in which the value of m is one for some repeat units and is two for other repeat units.

For convenience hereafter, the relationship:

$$\frac{\text{Flux}}{(100 - \%\ \text{salt rejection})}$$

is referred to herein as the "membrane factor". Membranes in accordance with the present invention typically have a membrane factor of at least 0.15. Preferred membranes are those having a membrane factor of at least 0.2 and especially those having a membrane factor of at least 0.5.

It will be appreciated that a membrane factor of 0.05 is achieved by a membrane having a salt rejection of 85% at a flux of 0.75 $m.day^{-1}$, and that other membranes having a greater salt rejection at a lower flux, or a lower salt rejection at a higher flux, may also have this membrane factor. Similarly, a membrane having a salt rejection of 90%at a flux of one $m.day^{-1}$ has a membrane factor of 0.1 whilst a salt rejection of 90% at a flux of 1.5 $m.day^{-1}$ corresponds to a membrane factor of 0.15. Preferred membranes having a membrane factor of at least 0.2 include those having a salt rejection of 95% at a flux of one $m.day^{-1}$ or a salt rejection of 90% at a flux of two $m.day^{-1}$ . Especially preferred membranes, which have a membrane factor of at least 0.5, include those having a salt rejection of 98% at a flux of one $m.day^{-1}$ or a salt rejection of 97% at a flux of 1.5 $m.day^{-1}$.

The membranes of the present invention have improved resistance to aggressive materials, for example acid and alkali. Thus, the membranes of the present invention can be used to treat water containing aggressive materials which cause deterioration of membranes formed from other materials.

The membranes may be of any thickness provided they possess the combination of salt rejection and water flux required to achieve a membrane factor of the specified minimum value. The membrane thickness can be in the range from 20 to 300 micrometres, and we have obtained particularly useful properties with membranes of thickness in the range from 50 to 250 micrometres, especially in the range 75 to 200 micrometres.

The group M will be dependent on any treatment to which the membrane has been subjected during its preparation or subsequent use, and not all of the groups M need be the same. Thus, the group M may be a mixture, for example, of hydrogen, sodium and barium atoms.

A preferred form of membrane of the present invention is one in which the sulphonated polyarylethersulphone contains repeat units of the formula:

(II) $\{Ph^1 - 0 - Ph^2 - 0 - Ph^1 - SO_2\}$

together with repeat units of the formula:

(III) $\{Ph^1 - 0 - Ph^1 - SO_2 - Ph^1 - 0 - Ph^1 - SO_2\}$

and optionally with repeat units of the formula:

(IV) $\{Ph^1 - 0 - Ph^1 - 0 - Ph^1 - SO_2\}$

wherein
$Ph^1$ is a phenylene ring;
$Ph^2$ is a phenylene ring having one or two groups $-SO_3M$ wherein M is a divalent metal.

The sulphonated polyarylethersulphones defined in the preceding paragraph can be obtained from the sulphonated copolymer of European Patent Specification No. 8894, which is a material having repeat units of the formula:

II $\{Ph^1 - 0 - Ph^2 - 0 - Ph^1 - SO_2\}$

together with the repeat units of the formula

III $\{Ph^1 - 0 - Ph^1 - SO_2 - Ph^1 - 0 - Ph^1 - SO_2\}$

wherein
$Ph^1$ represents a phenylene residue, preferably a para-phenylene residue;

$Ph^2$ represents a phenylene residue, preferably a para-phenylene residue, having one or two groups $-SO_3H$.

The sulphonated polysulphone may optionally also include a proportion of unsulphonated copolymer having repeat units of the formula

IV $\{Ph^1 - 0 - Ph^1 - 0 - Ph^1 - SO_2\}$

together with the repeat units of the formula III, wherein $Ph^1$ is as defined.

In the repeat units of the formula II, when $Ph^2$ is an ortho- or para- phenylene residue, there is typically only one group $-SO_3M$ whereas when $Ph^2$ is a meta-phenylene residue there are typically two groups $-SO_3M$. When $Ph^2$ is an ortho-phenylene residue, the $-SO_3M$ group is located in a position which is para- to one ether group and meta- to the other ether group, any further sulphonation occurring to locate the $-SO_3M$ in positions meta- to each other. When $Ph^2$ is a para-phenylene residue, the $-SO_3M$ group is located in a position ortho- to one ether group and meta- to the other ether group. When $Ph^2$ is a meta-phenylene residue, the $-SO_3M$ groups are located in the positions ortho- to one ether group and para- to the other ether group.

As is described in European Patent Specification No 8894, the sulphonated copolymers may be prepared by sulphonating a copolymer consisting of repeat units III and IV. The sulphonation is readily effected by dissolving the copolymer in concentrated sulphuric acid (98% w/w) at ambient temperature and agitating the mixture for a sufficient time for sulphonation of essentially all of the sub-units - 0 - $Ph^1$ - 0 - in the repeat units of formula IV. The copolymers which are subjected to sulphonation suitably have from 1 to 99 mole % of units IV and correspondingly from 99 to 1 mole % of units III, and especially from 5 to 80 mole % of units IV and corresponding from 95 to 20 mole % of units III. Sulphonation is desirably effected to convert at least 90% of the units IV to the units II.

The sulphonated copolymers used to produce membranes in accordance with the first aspect of the present invention are polymeric materials of high molecular weight such that the reduced viscosity (RV) of the polymer, measured as a 1% by weight solution of the polymer in dimethylformamide at 25 °C, is at least 0.2 and preferably at least 0.4. The polymer may be such as to give an RV of up to 2.5 but it is generally preferred that the RV of the polymer does not exceed 2.0.

The copolymer which is to be sulphonated is conveniently prepared using a mixture of monomers to produce the desired repeat units III and IV and hence the units III and IV are distributed in a random fashion along the polymer chain. Hence, in the sulphonated copolymer, the units II (and IV) and III are also distributed in a random fashion along the polymer chain.

According to a second aspect of the present invention, there are provided sulphonated polysulphone derivatives containing repeat units of the formula:-

(II) $\{Ph^1 - 0 - Ph^2 - 0 - Ph^1 - SO_2\}$

together with the repeat units of the formula

III $\{Ph^1 - 0 - Ph^1 - SO_2 - Ph^1 - 0 - Ph^1 - SO_2\}$

and optionally with a minor proportion of repeat units of the formula

IV $\{Ph^1 - 0 - Ph^1 - 0 - Ph^1 - SO_2\}$

wherein

$Ph^1$ represents a phenylene residue, preferably a para-phenylene residue;

$Ph^2$ represents a phenylene residue, preferably a para-phenylene residue, having one or two groups $-SO_3M$; and

M is a divalent metal in a proportion sufficient to combine with the unsatisfied valencies of the group $-SO_3$.

If units of the formula IV are present, they are preferably present in a molar proportion of not more than 25% molar of the units IV and V and especially not more 10% molar of the units IV and V.

The metal M is preferably an alkaline earth metal and we especially prefer that M is barium.

Membranes in accordance with the present invention can be prepared by casting a solution of a divalent metal salt of the sulphonated polysulphone or they can be prepared from a solution containing a sulphonated polyarylethersulphone, and a divalent metal in a specific solvent mixture.

More specifically there is provided a solution containing a sulphonated polyarylethersulphone and a divalent metal in a solvent mixture containing at least three components each of which is a non-solvent or poor solvent for the sulphonated polyarylethersulphone and which are

a) a liquid or a low melting solid containing at least one hydroxylic group and having a delta-H with a value of at least 8;

b) a liquid or a low melting solid having a delta-D with a value of at least 8 and a delta-P with a value of not more than 3;

c) a liquid or a low melting solid having a delta-P with a value of at least 8.5 and a delta-H with a value of not more than 3;

wherein

the solvent mixture forms a single liquid phase and none of the components of the solvent mixture reacts or complexes with another of the components of the solvent mixture or with the sulphonated polyarylethersulphone.

The sulphonated polyarylethersulphone is preferably a material as described herein and the divalent metal is preferably barium. The sulphonated polyarylethersulphone may be dissolved in the solvent mixture as the divalent metal salt thereof or the salt may be formed in the solvent mixture.

By "low melting solid" is meant a material which is solid at ambient temperature and has a melting point of not more than 50 °C.

In the solvent mixture, delta-H, delta-D and delta-P are components of the solubility parameter of each material which is a component of the solvent mixture and are related by the expression $(\text{delta-0})^2 = (\text{delta-H})^2 + (\text{delta-D})^2 + (\text{delta-P})^2$ where delta-0 is the solubility parameter and is given by the expression

$$(\text{delta-0}) = \left(\frac{\Delta E_v}{V}\right)^{\frac{1}{2}}$$

where

$\Delta E_v$ is the molar cohesive energy which approximates to $\Delta$ H-RT;
$\Delta$ H is the latent heat of vaporisation;
R is the gas constant;
T is the absolute temperature; and
V is the molar volume.

More specically, delta-H is the hydrogen bonding component of the solubility parameter, delta-D is the dispersion component of the solubility parameter and delta-P is the polar component of the solubility parameter.

The concept of solubility parameters is discussed in many papers in the scientific literature including, inter alia, a paper by C.M. Hansen in Ind. Eng. Chem. Prod. Res. Dev. 8, March 1969, pages 2 to 11. Other papers in which solubility parameters are considered are, inter alia, Chemical Reviews, 75 (1975), pages 731 to 753 and Kirk-Othmer "Encylopedia of Chemical Technology", Second Edition, Supplemental Volume (1971) pages 889 to 910.

A tabulation of values of delta-H, delta-D and delta-P is given in the Hansen paper and these may be used to determine suitable liquids for use as components (a), (b) and (c) of the solvent mixture.

Preferred materials for use as component (a) of the solvent mixture have a delta-H of at least 8 , a delta-D of not more than 8 and a delta-P of at least 6. Especially preferred materials have a delta-H of greater than 10, a delta-D of less than 8 and a delta-P of at least 6. From the Hansen paper, few materials have a delta-H of the required value and only diethylene glycol, dipropylene glycol, methanol and water satisfy the requirements for the preferred materials.

Preferred materials for use as component (b) of the solvent mixture have a delta-D with a value at least 8, a delta-P of not more than 3 and a delta-H of not more than 4. Materials satisfying the preferred requirements include, inter alia, 1,4-dioxane, and several halohydrocarbons. Furan and tetrahydrofuran have the preferred values of delta-D, delta-P and delta-H but are excluded due to the tendency of these materials to complex with the sulphonated polysulphone. Many hydrocarbons, particularly cyclic hydrocarbons, have the preferred values of delta-D, delta-P and delta-H but do not form a single phase mixture with most materials used as components (a) and (c) of the solvent mixture.

Preferred materials for use as component (c) of the solvent mixture have a delta-P of at least 8.5 , a delta-H of not more than 3 and a delta-D of at least 7.5. Materials satisfying the preferred requirements include inter alia, propylene carbonate, and ethylene carbonate.

The components of the solvent mixture are non-solvents or poor solvents for the sulphonated polysulphone and the divalent metal salt thereof and the polymer is typically soluble in each of the components in an amount of not more than 5% by weight preferably less than 1% by weight, especially less than 0.1% by weight.

The sulphonated polysulphone and the divalent metal salt thereof is preferably soluble in the solvent mixture in an amount of it least 10% by weight, more preferably at least 15% by weight, especially at least 20% by weight, for example 25 to 30% by weight. The quantity of polymer dissolved in the solvent mixture should be such that the resulting solution can be cast into a satisfactory membrane and this will be dependent not only on the components of the solvent mixture but also on the molecular weight of the polymer and the degree of sulphonation of the polymer.

The components of the solvent mixture and the proportions thereof, are preferably such that the solvent mixture has a delta-H of value in the range from 4.5 to 5.5; a delta-P of value in the range from 4 to 8 and a delta-D of value in the range from 7.5 to 9.

A solvent mixture which may be used is one containing

a) $R^1OH$ or $R^1COOH$, where $R^1$ is a hydrogen atom or a hydrocarbyl group;

b) an ether, particularly a cyclic ether; and

c) an alkylene carbonate.

In the solvent mixture, the hydroxylic compound which is component (a) is preferably one in which $R^1$ is a hydrogen atom or a lower alkyl group, for example an alkyl group containing 1 to 6 carbon atoms. The hydroxylic compound, is preferably a compound of the formula $R^1OH$, and is especially water. We have found that 1,4-dioxane is particularly suitable for use as component (b) of the solvent mixture. The alkylene carbonate which is component (c) of the solvent mixture is preferably one in which the alkylene group contains two or three carbon atoms and may be, for example, propylene carbonate or ethylene carbonate.

Membranes can be formed by casting and coagulating the solution of the sulphonated polysulphone and divalent metal in the solvent mixture and it is preferred that the solvent mixture contains at least one component which has sufficient volatility so that this component at least partially evaporates during the casting of the solution, prior to immersing the cast film and support in the coagulation bath. It is also preferred that the salt of the sulphonated polysulphone has a reduced solubility in the residual solvent mixture which results as a consequence of the at least partial evaporation of the volatile component or components.

The solvent mixture may consist of four or more components but, for convenience of preparing the solvent mixture, it is preferred to minimise the number of components and hence the solvent mixture typically consists of three components.

A wide range of solvent mixtures can be used. For sulphonated polyarylethersulphones as disclosed herein with reference to European Patent Specification No 8894, and the divalent metal salts thereof, we have obtained a solvent mixture having satisfactory characteristics from a mixture consisting of propylene carbonate, 1,4-dioxane and water. This mixture suitably contains at least 15% by weight of propylene carbonate, at least 15% by weight of 1,4-dioxane, and not more than 25% by weight of water, the total amounts of the three components aggregating to 100% by weight. We particularly prefer that the mixture contains 5 to 20% by weight of water, 20 to 70% by weight of propylene carbonate and 20 to 66% by weight of 1,4-dioxane, the total amounts of the three components aggregating to 100% by weight.

The most suitable mixtures for any particular sulphonated material depend not only on the basic polymer structure, that is the unsulphonated material, but also upon the sulphonation ratio of the polymer and also the nature of the metal salt produced. By "sulphonation ratio" we mean the ratio of the number of sulphonated phenylene residues in the sulphonated polymer to the number of unsulphonated phenylene residues in the sulphonated polymer. The sulphonation ratio can be determined by titration. In general, polymers having lower sulphonation ratios require solvent mixtures in which the value of delta-H and delta-P for the solvent mixture is reduced. For the solvent mixture propylene carbonate, 1,4-dioxane and water, this is achieved with a mixture having a lower water content and a higher 1,4-dioxane content. The most suitable mixtures for any given sulphonated polymer and metal salt thereof can be readily ascertained by trial. Thus, we have found that with a sulphonated polyarylethersulphone and the barium salt thereof containing units II and III as specified herein, and essentially free of the units IV, in which the proportion of units II are such as to give a sulphonation ratio of 1:10, the preferred mixture consists of propylene carbonate, 1,4-dioxane and water in the weight ratios of 5:3:1.

The solution may be prepared by dissolving the sulphonated polysulphone, including the divalent metal salt thereof, in any suitable form, for example powder, chips, granules, in the solvent mixture to form a solution containing from 10% to 40% by weight of the sulphonated polysulphone. Dissolution of the polymer may be effected at ambient temperature but lower or higher temperatures may be used if desired.

The polymer which is dissolved in the solvent mixture may be added as the pre-formed divalent metal salt thereof. However, some of the divalent metal salts, for example the barium salts, are not readily soluble in the solvent mixture. Solutions of such salts can be obtained by dissolving the sulphonated polysulphone, in the acid form, in the solvent mixture and contacting the solution obtained with a compound of a divalent metal to form the desired salt of the divalent metal and sulphonated polysulphone. The compound of a divalent metal is preferably a compound of a metal of Group IIA of the Periodic Table, such as magnesium or calcium, but we prefer to use a barium compound. The divalent metal compound may be an oxide, hydroxide or carbonate but other compounds which are capable of reacting with the sulphonic acid group may also be used. We have obtained membranes having a combination of high salt rejection at a high water flux using barium oxide as the metal compound.

Using a procedure in which the solution of the sulphonated polysulphone is reacted with a compound of a divalent metal, the compound of the divalent metal is preferably used in an amount sufficient to react with at least 25% of the sulphonic acid groups in the sulphonated polysulphone. However, it is particularly preferred to use the compound of the divalent metal in an amount sufficient to react with at least 80%, and especially with essentially 100%, of the sulphonic acid groups.

The compound of the divalent metal is preferably added to the solution of the sulphonated polysulphone in the stoichiometric proportion to ensure essentially complete reaction. The reaction of the divalent metal compound with the solution containing the sulphonated polysulphone may he effected at essentially ambient temperature but higher or lower temperatures may be used if desired, for example in the range 0 °C to 100 °C.

The solution of the sulphonated polysulphone and divalent metal in the solvent mixture can be cast and coagulated to form a membrane.

More specifically, a sulphonated polysulphone in the acid form is dissolved in a solvent mixture containing

a) at least one alkylene carbonate;
b) at least one ether; and
c) at least one hydroxyl compound selected from
$R^1COOH$ and
$R^1OH$, wherein $R^1$ is a hydrogen atom or a hydrocarbyl group,

the solution is contacted with a compound of a divalent metal to form a salt of the divalent metal and the sulphonated polysulphone, any solid unreacted quantity of the compound of the divalent metal is separated from the solution, the solution is cast onto a support to form a film of the solution on the support, the film and support are immersed in a coagulation bath and a membrane is recovered.

The solution of the metal salt of the sulphonated polysulphone is formed into a membrane by casting on a support. Casting onto the support may be effected at essentially ambient temperature but lower or higher temperatures may be used if desired. The support may be for example a non-porous plane surface such as a glass or metal plate or, alternatively, may be a porous support such as a fabric and, where appropriate, it may have some other shape. Sufficient of the solution is cast on to the support in conventional manner to give a film of the desired thickness which may be adjusted as necessary by suitable mechanical means. It is preferred to produce a film having a thickness of at least 20 micrometres and not more than 300 micrometres, most preferably from 50 up to 250 micrometres, and especially from 75 up to 200 micrometres. Alternatively, fine hollow fibres may be produced by extruding the solution through a die having a central mandrel, allowing some of the solvent to evaporate and then passing the fibres through a coagulation bath.

It is advantageous to allow at least partial evaporation of at least one component of the solvent mixture from the supported liquid film by exposing the latter to the atmosphere for a short time, 10 seconds to 5 minutes, before immersing the supported film in a coagulation bath. The coagulation bath may contain an aqueous solution, for example a solution of an inorganic salt such as sodium chloride or sodium nitrate, or may be a non-solvent liquid, or liquid mixture, for example formed from one or more of the components of the solvent mixture. Preferably the coagulation bath is pure water. The temperature of the coagulation bath is generally between -20 °C and 60 °C, and is preferably about 0 °C. The coagulation treatment may be between 1 minute and several hours, for example between 5 and 60 minutes.

After the coagulation treatment, a membrane is recovered. In the case of a non-porous support, the membrane is detached from the support but in the case of a porous support, the membrane remains adhered to the support. The recovered membrane may be subjected to heat treatment in order to relax the structure. Such a treatment preferably includes an immersion in an aqueous solution of an inorganic salt at an elevated temperature, typically from 70 °C to 150 °C. This heat treament may be effected with the membrane being held under pressure (4 to 100 $kN/m^2$), between porous supports such as porous graphite,

sintered stainless steel or filter paper on a non-porous support. Once prepared, and after any heat treatment, the membrane is preferably washed with distilled water to remove free ionic species and is then stored in distilled water until required.

The membranes as prepared by casting are formed from the sulphonated polysulphone in the form of the divalent metal salt thereof. However, if the coagulation bath, and any subsequent heat treatment baths, contain an inorganic salt, ion exchange may occur between the divalent metal ions in the membrane and the metal ions in the solution.

Before being used for treatment of liquids, the membranes may be treated with a suitable acid to convert the salt of the sulphonated polysulphone into the acid form thereof.

To reduce the possibility of variations in membrane properties, it is desirable that all stages in the preparation of the casting solution and the casting and coagulation steps are effected under carefully controlled conditions of time, temperature and humidity. During the casting and subsequent evaporation, it is preferred that the humidity does not exceed about 65% relative humidity, for example in the range 35 to 50% relative humidity.

Membranes obtained by the method of the invention may be used for the treatment of a wide variety of aqueous or non-aqueous solutions or suspensions by conventional reverse osmosis or ultra-filtration techniques. In particular, they may be used for the desalination of sea water and for the purification of brackish waters and industrial effluents.

Membranes formed from sulphonated polysulphones are more resistant to the presence of agressive materials such as acids and alkalis. Hence, using membranes formed from sulphonated polysulphones, aqueous solutions may he treated in the presence of aggressive materials at levels which can cause deterioration of membranes formed from other materials such as cellulosics.

The accompanying drawing is a diagrammatic representation of a reverse osmosis cell in which the membranes of the present invention may be used.

The cell comprises a closed vessel 1 which is divided into two sections internally by a membrane 2. The membrane 2 is in contact with a sheet 3 of a porous material for example filter paper, and sheet 3 is supported by a porous plate 4 which is not semi-permeable and which assists in preventing mechanical deformation of the membrane 2. The membrane 2, the sheet 3 and porous plate 4 are clamped at their edges to prevent leaking around the edges. The vessel 1 is divided by the membrane 2 into a large section 5 and a small section 6. The large section 5 is provided with two pipelines 7 and 8 for the supply and removal of liquid. The small section 6 is provided with a pipeline 9. In use, liquid under pressure, for example sea water at a pressure of $4MNm^{-2}$, is passed into section 5 of the vessel 1 through pipeline 7 and is withdrawn through pipeline 8. The pressure is sufficient to cause reverse osmosis and some water passes through the membrane 2 into the section 6 from which it is withdrawn through the pipeline 9. The apparatus can be operated at ambient temperature (about 25 °C) but higher temperatures may be used. In a continuous process, a further pipeline may be connected to section 6 of the vessel 1 whereby a continuous flow of a carrier liquid, which is the liquid being collected, is passed through section 6. Other modifications and variations may be effected in the manner known to those skilled in the art.

It is preferred that the membrane possesses a combination of high salt rejection (at least 90%) at a high water flux (at least 1 $m.day^{-1}$). However, for some applications, for example dewatering, a lower salt rejection can be tolerated and hence it is not essential for such applications that the membrane used does provide such a combination of salt rejection and flux characteristics.

Various aspects of the present invention are illustrated, but not limited, by the following Examples, in which all parts and percentages are by weight unless otherwise indicated.

EXAMPLE 1

A sulphonated polyarylethersulphone copolymer as described in European Patent Publication No 8894, containing 33% mole of units II in which $Ph^2$ is a para-phenylene residue and M is a hydrogen atom, 67% mole of units III, having a sulphonation ratio of 1:10, and a reduced viscosity (as defined herein) of 0.82, was dissolved, at a temperature of 25 °C, in a 5:3:1 parts by weight propylene carbonate/1,4-dioxane/water mixture to give a 25% parts by weight solution of the copolymer in the solvent mixture.

Barium oxide (BDH Technical Grade, of purity greater than 95% and particle size less than 10 micrometres) was added to the solution in the stoichiometric amount required to convert the sulphonic acid groups into the corresponding barium salt form. The mixture was stirred at 25 °C for 10 hours by which time all of the solid barium oxide had dissolved. The solution was filtered through a gauze with a mesh size of 30 micrometres and then centrifuged at 2000 r.p.m. for 20 to 30 minutes.

The solution obtained was cast on to a glass plate and the thickness of the film was adjusted manually

using a brass spreader bar. The film so formed was exposed to the atmosphere at the ambient temperature for one minute before being coagulated by immersion in distilled water at 0 °C for 30 minutes. The membrane was washed with distilled water and then stored in distilled water until tested.

The membrane was tested using an apparatus of the type hereinbefore described and in which the membrane was placed in contact with a porous support and the exposed side, being the side exposed to the air during casting, was subjected to a continuous feed of 0.2% aqueous sodium chloride solution pumped across the surface of the membrane at a pressure of about $4MNm^{-2}$ and a temperature of 25 °C. The liquid passing through the membrane was analysed.

EXAMPLES 2 AND 3

The procedure of Example 1 was repeated with the difference that calcium oxide (Example 2) or magnesium oxide (Example 3) were used rather than barium oxide.

COMPARATIVE EXAMPLES A AND B

The procedure of Example 1 was repeated with the difference that no metal compound was used (Comparative Example A) or aluminium oxide was used (Comparative Example B).

The results of testing the membranes of Examples 1 to 3, and the Comparative Examples are given in Table One.

**TABLE ONE**

| Example or Comparative Example | S.R. (%) (a) | Flux ($m.day^{-1}$) (b) |
|---|---|---|
| 1 | 95 | 0.4 |
| 2 | 93.7 | 0.18 |
| 3 | 87.3 | 0.47 |
| A | 88 | 0.27 |
| B | 53 | 1.89 |

**Notes to Table One**

(a) S.R. is % salt rejection and is determined measuring the conductivity of the solution fed to the membrane cell and by measuring the conductivity of the solution permeating the membrane and using the relationship:-

$$\%\ \text{salt rejection} = \left(1 - \frac{\text{conductivity of permeate}}{\text{conductivity of feed}}\right) \times 100.$$

(b) Flux is the volume (in $m^3$) of the solution which passes through a membrane area of one $m^2$ in one day and is expressed as $m.day^{-1}$.

EXAMPLES 4 TO 20

A sulphonated polyarylethersulphone copolymer as described in Example 1 was dissolved, at a temperature of 25 °C, in a 5:3:1 parts by weight propylene carbonate/1,4-dioxane/water mixture to give a 26.6% by weight solution of the copolymer in the solvent mixture.

Barium oxide (as used in Example 1) was added to the solution in an amount calculated to give complete reaction with the sulphonic acid groups. The mixture was stirred at 25 °C for 10 hours by which time all of the solid barium oxide had dissolved. The solution was filtered and centrifuged as in Example 1.

The production of a membrane from the solution was effected inside a cabinet in which humidity and temperature were controlled. The solution was cast on to a glass plate, and the thickness of the film formed on the plate was adjusted manually using a brass spreader bar. This operation required from 3 to 12 seconds to complete.

After 60 seconds evaporation in air of known humidity, coagulation of the film was affected by immersion for 20 minutes in water at about 1 °C.

The recovered membrane was washed, stored and tested as described in Example 1. Further details of the membrane preparation conditions, and the results of testing the membranes produced, are summarised in Table Two.

**TABLE TWO**

| Example | Production Conditions | | | Thickness | Membrane Properties | | |
|---|---|---|---|---|---|---|---|
| | Casting | | Quench | | S.R. | Flux | M.F. |
| | Humidity (%) | Temp (°C) | Temp (°C) | ($m^{-6}$) | (a) (%) | (b) ($mday^{-1}$) | (c) |
| 4 | 39 | 21.5 | 0.8 | 86 | 93.5 | 1.1 | 0.17 |
| 5 | 43 | 21.5 | 1.0 | 87 | 94.2 | 1.55 | 0.27 |
| 6 | 45 | 21.5 | 0.3 | 76 | 97.3 | 1.36 | 0.50 |
| 7 | 47 | 22 | 0.8 | 131 | 97.8 | 1.19 | 0.54 |
| 8 | 47.5 | 22 | 0.9 | 94 | 98.6 | 0.85 | 0.61 |
| 9 | 45 | 22 | 0.8 | 149 | 98.8 | 0.79 | 0.66 |
| 10 | 44 | 22 | 0.7 | 102 | 95.5 | 1.34 | 0.30 |
| 11 | 44 | 22.5 | 1.0 | 61 | 96.7 | 0.8 | 0.24 |
| 12 | 43.5 | 23 | 0.6 | 200 | 95.4 | 1.0 | 0.22 |
| 13 | 40.5 | 22.5 | 0.6 | 120 | 96.3 | 1.66 | 0.45 |
| 14 | 41.5 | 22 | 0.5 | 50 | 95.4 | 0.96 | 0.21 |
| 15* | 41.5 | 19.5 | 0.6 | 90 | 97.3 | 0.93 | 0.34 |
| 16* | 41.5 | 19.5 | 0.6 | 96 | 93.3 | 1.42 | 0.21 |
| 17* | 41 | 20 | 0.5 | 170 | 94.3 | 1.0 | 0.18 |
| 18* | 42 | 20 | 0.5 | 88 | 96 | 1.0 | 0.25 |
| 19* | 42 | 20 | 0.8 | 116 | 90.6 | 2.2 | 0.23 |
| 20* | 43 | 20 | 0.7 | 109 | 98.3 | 0.9 | 0.53 |

**Notes to Table Two**

(a) and (b) are as defined in Notes to Table One.

(c) M.F. is the membrane factor and is given by the relationship

$$\frac{\text{Flux (in m.day}^{-1}\text{)}}{\text{(100 - \% salt rejection)}}$$

In the Examples marked *, the barium salt was prepared the day before casting was carried out, in the remaining Examples the barium salt was prepared and the solution was cast on the same day.

EXAMPLES 21 AND 22

The procedure of Examples 4 to 20 was repeated using zinc oxide (Example 21) or barium oxide (Example 22). Casting was affected at a humidity of 62% and a temperature of 20.5 °C. For comparison (Comparative Example C), the procedure was repeated with the exception that a pre-formed sodium salt of the sulphonated polysulphone was used rather than the acid form of the sulphonated polysulphone with subsequent addition of the metal oxide. The membrane thickness was 0.15mm.

The results obtained are set out in Table Three.

**TABLE THREE**

| Example or Comp. Example | S.R. (a) (%) | Flux (b) ($m.day^{1}$) |
|---|---|---|
| 21 | 67.2 | 0.72 |
| 22 | 93.0 | 0.74 |
| C | 32.8 | 1.78 |

**Notes to Table Three**

(a) and (b) are as defined in Notes to Table One.

EXAMPLES 23 AND 24

A sulphonated polyarylethersulphone copolymer as described in European Patent Publication No. 8894, containing 40 mole % of units II and 60 mole % of units III, having a sulphonation ratio of 1:8 and a reduced viscosity of 1.54 was dissolved, at a temperature of 25 °C, in a 5:3:1 parts by weight propylene carbonate/1,4-dioxane/water mixture.

The solutions obtained were reacted with barium oxide, formed into membranes 0.15mm thick and tested as in Examples 4 to 20, further details being given in Table Four.

**TABLE FOUR**

| Example | C.S. $conc^n$ (d) (%) | Casting Conditions | | Membrane Properties | | |
|---|---|---|---|---|---|---|
| | | Humidity (%) | Temp. (°C) | S.R. (a) (%) | Flux (b) ($m.day^{-1}$) | M.F. (c) |
| 23 | 20 | 66 | 21 | 94.3 | 1.0 | 0.18 |
| 24 | 26 | 80 | 22.5 | 94.7 | 0.19 | 0.035 |

**Notes to Table Four**

(a) and (b) are as defined in Notes to Table One.

(c) is as defined in Notes to Table Two.

(d) C.S. $conc^n$ is the concentration in weight %, of the sulphonated polarylethersulphone copolymer, dissolved in the solution.

EXAMPLES 25 TO 32

Membranes were produced as described in Examples 4 to 20, at a humidity of 65% and a temperature of 21 °C. The membranes were 0.15mm thick. As in the preceding Examples, the membranes were not heat treated.

The membranes were tested, immersed in various solutions for several days and tested once more. For the purposes of comparison tests were also carried out on a commercially available cellulose acetate membrane which, as supplied, had been subjected to a heat treatment.

The results of the tests are set out in Table Five.

TABLE FIVE

| Example or Comp. Example. | Membrane material (e) | Soln (f) | Time (days) (h) | S.R. (a) (%) | Flux (b) ($m.day^{-1}$) |
|---|---|---|---|---|---|
| 25 | SPS | $Cl_2$ | 0 | 91.5 | 0.42 |
| 26 | SPS | $Cl_2$ | 8 | 56.7 | 0.39 |
| 27 | SPS | HCl | 0 | 97.5 | 0.57 |
| 28 | SPS | HCl | 6 | 80 | 0.49 |
| 29 | SPS | NaOH | 0 | 94.8 | 0.42 |
| 30 | SPS | NaOH | 6 | 60.9 | 0.65 |
| 31 | SPS | NaCl | 0 | 91.7 | 0.59 |
| 32 | SPS | NaCl | 6 | 64.1 | 0.51 |
| D | CA | $Cl_2$ | 0 | 88.0 | 2.32 |
| E | CA | $Cl_2$ | 9 | 88.7 | 1.73 |
| F | CA | HCl | 0 | 81.8 | 2.56 |
| G | CA | HCl | 6 | 0 | N.D. |
| H | CA | NaOH | 0 | 82.6 | 2.89 |
| I | CA | NaOH | 6 | 0 | N.D. |

Notes to Table Five

(a) and (b) are as defined in Notes to Table One

(e) SPS is the sulphonated polyarylethersulphone copolymer of Example 1.
CA is a commercially available cellulose acetate membrane

(f) $Cl_2$ is water containing 100 p.p.m. of dissolved chlorine
HCl is 1N hydrochloric acid
NaOH is 1N aqueous sodium hydroxide solution
NaCl is a 0.2% by weight aqueous solution of sodium chloride.

(h) 0 indicates the test was effected before immersing the membrane in the test solution.
6, 8 and 9 indicate that the test was effected after immersing the membrane in the test solution for the number of days indicated.

N.D. indicates that the quantity was not determined.

## Claims

### Claims for the following Contracting States: BE, CH, DE, FR, GB, IT, LU, NL, SE

**1.** An asymmetric semi-permeable membrane wherein the support layer and the active layer are both

formed from the same sulphonated polyarylethersulphone and wherein the membrane has a salt rejection and flux which are such that the ratio:

$$\frac{\text{Flux (in m. day}^{-1}\text{)}}{\text{(100 - \% salt rejection)}}$$

has a value of at least 0.05 when the salt rejection and flux are determined in a reverse osmosis cell using a 0.2% by weight aqueous solution of sodium chloride at a pressure of 40 bar and a temperature of 25° C;

characterised in that the sulphonated polyarylethersulphone comprises repeat units of the formula:

$$\text{I} \qquad \left[ -(Ph - O)_m - Ph - SO_2 - \right]$$

wherein

Ph is a phenylene ring and at least some of the groups Ph are sulphonated;
m is 1 or 2 and the value of m can differ along the polymer chain; and
the sulphonated polyarylethersulphone is in the form of a divalent metal salt.

**2.** A membrane as claimed in Claim 1, wherein said ratio has a value of at least 0.2.

**3.** A membrane as claimed in Claim 1, wherein said ratio has a value in the range 0.5 to 0.66.

**4.** A membrane as claimed in Claim 3, wherein the salt rejection is in the range 97.3% to 98.8%.

**5.** A membrane as claimed in any of the preceding claims whereof the sulphonated polyarylethersulphone contains repeat units of the formula:

(II) $-(Ph^1 - O - Ph^2 - O - Ph^1 - SO_2)-$

together with repeat units of the formula:

(III) $-(Ph^1 - O - Ph^1 - SO_2 - Ph^1 - O\text{-}Ph^1 - SO_2)-$

and optionally with repeat units of the formula:

(IV) $-(Ph^1 - O - Ph^1 - O - Ph^1 - SO_2)-$

wherein

$Ph^1$ is a phenylene ring;
$Ph^2$ is a phenylene ring having one or two groups $-SO_3M$ wherein
M is a divalent metal.

**6.** A membrane as claimed in Claim 5, wherein in at least some of the $-SO_3M$ groups M is an alkaline earth element.

**7.** A membrane as claimed in Claim 6, wherein in at least some of the $-SO_3M$ groups M is barium.

**8.** A membrane as claimed in Claim 5, wherein M is calcium or magnesium.

**9.** A membrane as claimed in any of the preceding claims, which is in the form of fine, hollow fibres.

**10.** A sulphonated polyarylethersulphone salt containing repeat units of the formula:

II $\{Ph^1 - O - Ph^2 - O - Ph^1 - SO_2\}$

together with the repeat units of the formula:

III $\{Ph^1 - O - Ph^1 - SO_2 - Ph^1 - O - Ph^1 - SO_2\}$

and optionally a minor proportion of repeat units of the formula

IV $\{Ph^1 - O - Ph^1 - O - Ph^1 - SO_2\}$

said minor proportion being a molar proportion of not more than 25% molar of the total of units II and IV,
wherein
$Ph^1$ is a phenylene ring;
$Ph^2$ is a phenylene ring having one or two groups $-SO_3M$ wherein in at least some of the groups $-SO_3M$
M is a divalent metal in a proportion sufficient to combine with the unsatisfied valencies of the groups $-SO_3$.

**11.** A salt as claimed in Claim 10 wherein M is barium.

**12.** A solution comprising a salt as claimed in Claim 10 to 11 in a solvent mixture containing
(a) at least one alkylene carbonate;
(b) at least one ether; and
(c) at least one hydroxyl compound selected from $R^1COOH$ and $R^1OH$
wherein
$R^1$ is a hydrogen atom or a hydrocarbyl group;
the solubility of the salt in each of components (a), (b) and (c), separately, being not more than 5% by weight, the salt being present in the solvent mixture in an amount of at least 10% by weight and the components (a), (b) and (c) being such that they are present in a single phase and none of said components reacts or complexes with another of said components or with the salt.

**13.** A solution as claimed in Claim 12, wherein the solvent mixture contains propylene carbonate, 1,4-dioxane and water.

**14.** A solution as claimed in Claim 13, wherein the solvent mixture contains at least 15% by weight of propylene carbonate, at least 15% by weight of 1,4-dioxane and not more than 25% by weight of water, the total amounts of three components aggregating to 100% by weight.

**15.** A process for producing a solution as claimed in Claim 12, which comprises dissolving a sulphonated polyarylethersulphone in the acid form, in the solvent mixture and reacting the solution obtained with a compound of the divalent metal, the sulphonated polyarylethersulphone and said compound being used in quantities such that in the solution obtained the salt is present in a concentration of at least 10% by weight.

**16.** A process for the production of a membrane which comprises casting a film onto a support by applying thereto a solution as claimed in any of Claims 12 to 14, or as obtained by a process as claimed in Claim 15, immersing in a coagulation bath the cast film and recovering the resulting membrane from the coagulation bath.

**17.** A process as claimed in Claim 16 wherein the supported cast film is exposed to the atmosphere for from 10 seconds to 5 minutes and then immersed in the coagulation bath.

**18.** A process for the production of a membrane in the form of fine, hollow fibres, which comprises extruding through a die having a central mandrel a solution as claimed in any of Claims 12 to 14 or as obtained by the process as claimed in Claim 15, allowing some of the solvent to evaporate and then passing the resulting fibres through a coagulation bath.

**19.** A process for the desalination of sea water, or for the purification of brackish waters and industrial effluents, by effecting reverse osmosis or ultrafiltration using a membrane as claimed in any one of Claims 1 to 9 or as obtained by the process of Claim 16, 17 or 18.

**20.** A reverse osmosis or ultrafiltration apparatus whereof the membrane is as claimed in any one of Claims 1 to 9 or as obtained by the process of Claim 16, 17 or 18.

**Claims for the following Contracting State: AT**

**1.** An asymmetric semi-permeable membrane wherein the support layer and the active layer are both formed from the same sulphonated polyarylethersulphone and wherein the membrane has a salt rejection and flux which are such that the ratio:

$$\frac{\text{Flux (in m. day}^{-1}\text{)}}{\text{(100 - \% salt rejection)}}$$

has a value of at least 0.05 when the salt rejection and flux are determined in a reverse osmosis cell using a 0.2% by weight aqueous solution of sodium chloride at a pressure of 40 bar and a temperature of 25 °C;

characterised in that the sulphonated polyarylethersulphone comprises repeat units of the formula:

$$\text{I} \qquad \left[ (Ph - O)_m - Ph - SO_2 \right]$$

wherein

Ph is a phenylene ring and at least some of the groups Ph are sulphonated;

m is 1 or 2 and the value of m can differ along the polymer chain; and

the sulphonated polyarylethersulphone is in the form of a divalent metal salt.

**2.** A membrane as claimed in Claim 1, wherein said ratio has a value of at least 0.2.

**3.** A membrane as claimed in Claim 1, wherein said ratio has a value in the range 0.5 to 0.66.

**4.** A membrane as claimed in Claim 3, wherein the salt rejection is in the range 97.3% to 98.8%.

**5.** A membrane as claimed in any of the preceding claims whereof the sulphonated polyarylethersulphone contains repeat units of the formula:

(II) $\left( Ph^1 - O - Ph^2 - O - Ph^1 - SO_2 \right)$

together with repeat units of the formula:

(III) $\left( Ph^1 - O - Ph^1 - SO_2 - Ph^1 - O\text{-}Ph^1 - SO_2 \right)$

and optionally with repeat units of the formula:

(IV) $\left( Ph^1 - O - Ph^1\ O - Ph^1 - SO_2 \right)$

wherein

$Ph^1$ is a phenylene ring;

$Ph^2$ is a phenylene ring having one or two groups $-SO_3M$ wherein

M is a divalent metal.

**6.** A membrane as claimed in Claim 5, wherein in at least some of the $-SO_3M$ groups M is an alkaline

earth element.

**7.** A membrane as claimed in Claim 6, wherein in at least some of the $-SO_3M$ groups M is barium.

**8.** A membrane as claimed in Claim 5, wherein M is calcium or magnesium.

**9.** A membrane as claimed in any of the preceding claims, which is in the form of fine, hollow fibres.

**10.** A process for the production of a divalent metal salt of a sulphonated polyarylethersulphone containing repeat units of the formula:

II $\left( Ph^1 - O - Ph^2 - O - Ph^1 - SO_2 \right)$

together with the repeat units of the formula:

III $\left( Ph^1 - O - Ph^1 - SO_2 - Ph^1 - O - Ph^1 - SO_2 \right)$

and optionally a minor proportion of repeat units of the formula

IV $\left( Ph^1 - O - Ph^1 - O - Ph^1 - SO_2 \right)$

said minor proportion being a molar proportion of not more than 25% molar of the total of units II and IV,
wherein
$Ph^1$ is a phenylene ring;
$Ph^2$ is a phenylene ring having one or two groups $-SO_3M$ wherein in at least some of the groups $-SO_3M$
M is a divalent metal in a proportion sufficient to combine with the unsatisfied valencies of the groups $-SO_3$,
characterised in that the sulphonated polyarylethersulphone is reacted with a compound of a divalent metal.

**11.** A process according to Claim 10, wherein the divalent metal is barium.

**12.** A solution comprising a divalent metal salt obtained by the process claimed in Claim 10 in a solvent mixture containing:
(a) at least one alkylene carbonate;
(b) at least one ether; and
(c) at least one hydroxyl compound selected from $R^1COOH$ and $R^1OH$
wherein
$R^1$ is a hydrogen atom or a hydrocarbyl group; the solubility of the salt in each of components (a), (b) and (c), separately, being not more than 5% by weight, the salt being present in the solvent mixture in an amount of at least 10% by weight and the components (a), (b) and (c) being such that they are present in a single phase and none of said components reacts or complexes with another of said components or with the salt.

**13.** A solution as claimed in Claim 12, wherein the solvent mixture contains propylene carbonate, 1,4-dioxane and water.

**14.** A solution as claimed in Claim 13, wherein the solvent mixture contains at least 15% by weight of propylene carbonate, at least 15% by weight of 1,4-dioxane and not more than 25% by weight of water, the total amounts of three components aggregating to 100% by weight.

**15.** A process for producing a solution as claimed in Claim 12, which comprises dissolving a sulphonated polyarylethersulphone in the acid form, in the solvent mixture and reacting the solution obtained with a compound of the divalent metal, the sulphonated polyarylethersulphone and said compound being used in quantities such that in the solution obtained the salt is present in a concentration of at least 10% by weight.

**16.** A process for the production of a membrane which comprises casting a film onto a support by applying thereto a solution as claimed in any of Claims 12 to 14, or as obtained by a process as claimed in Claim 15, immersing in a coagulation bath the cast film and recovering the resulting membrane from the coagulation bath.

**17.** A process as claimed in Claim 16 wherein the supported cast film is exposed to the atmosphere for from 10 seconds to 5 minutes and then immersed in the coagulation bath.

**18.** A process for the production of a membrane in the form of fine, hollow fibres, which comprises extruding through a die having a central mandrel a solution as claimed in any of Claims 12 to 14 or as obtained by the process as claimed in Claim 15, allowing some of the solvent to evaporate and then passing the resulting fibres through a coagulation bath.

**19.** A process for the desalination of sea water, or for the purification of brackish waters and industrial effluents, by effecting reverse osmosis or ultrafiltration using a membrane as claimed in any one of Claims 1 to 9 or as obtained by the process of Claim 16, 17 or 18.

**20.** A reverse osmosis or ultrafiltration apparatus whereof the membrane is as claimed in any one of Claims 1 to 9 or as obtained by the process of Claim 16, 17 or 18.

**Revendications**
**Revendications pour les Etats contractants suivants: BE, CH, DE, FR, GB, IT, LU, NL, SE**

**1.** Membrane semi-perméable asymétrique dans laquelle la couche de support et la couche active sont toutes deux formées de la même polyaryléthersulfone sulfonée et dans laquelle la membrane a une réjection du sel et un flux qui sont tels que le rapport :

$$\frac{\text{Flux (en m.jour}^{-1}\text{)}}{\text{(100 - \% de réjection du sel)}}$$

a une valeur d'au moins 0,05 lorsque la réjection du sel et le flux sont déterminés dans une cellule d'osmose inverse avec une solution aqueuse à 0,2% en poids de chlorure de sodium sous une pression de 40 bars et à une température de 25° C,

caractérisée en ce que la polyaryléthersulfone sulfonée comprend des unités récurrentes de la formule :

$$-\!\left[\left(Ph - O\right)_m Ph - SO_2\right]\!- \qquad (I)$$

où

Ph est un cycle phénylène et au moins certains des radicaux Ph sont sulfonés,
m est 1 ou 2 et la valeur de m peut différer le long de la chaîne du polymère, et
la polyaryléthersulfone sulfonée se trouve sous la forme d'un sel de métal divalent.

**2.** Membrane suivant la revendication 1, dans laquelle le rapport a une valeur d'au moins 0,2.

**3.** Membrane suivant la revendication 1, dans laquelle le rapport a une valeur de l'intervalle de 0,5 à 0,66.

**4.** Membrane suivant la revendication 3, dans laquelle la réjection du sel se situe dans l'intervalle de 97,3% à 98,8%.

**5.** Membrane suivant l'une quelconque des revendications précédentes, dont la polyaryléthersulfone sulfonée contient des unités récurrentes de la formule :

$\{ Ph^1 - O - Ph^2 - O - Ph^1 - SO_2 \}$ (II)

conjointement avec des unités récurrentes de la formule :

$\{ Ph^1 - O - Ph^1 - SO_2 - Ph^1 - O - Ph^1 - SO_2 \}$ (III)

et facultativement avec des unités récurrentes de la formule :

$\{ Ph^1 - O - Ph^1 - O - Ph^1 - SO_2 \}$ (IV)

où

$Ph^1$ est un radical phénylène,

$Ph^2$ est un radical phénylène portant un ou deux radicaux $-SO_3M$, où

M est un métal divalent.

6. Membrane suivant la revendication 5, dans laquelle dans au moins certains des radicaux $-SO_3M$, M est un élément alcalino-terreux.

7. Membrane suivant la revendication 6, dans laquelle dans au moins certains des radicaux $-SO_3M$, M est le baryum.

8. Membrane suivant la revendication 5, dans laquelle M est le calcium ou le magnésium.

9. Membrane suivant l'une quelconque des revendications précédentes, qui se présente sous la forme de fines fibres creuses.

10. Procédé de production d'un sel de métal divalent d'une polyaryléthersulfone sulfonée contenant des unités récurrentes de la formule :

$\{ Ph^1 - O - Ph^2 - O - Ph^1 - SO_2 \}$ (II)

conjointement avec des unités récurrentes de la formule :

$\{ Ph^1 - O - Ph^1 - SO_2 - Ph^1 - O - Ph^1 - SO_2 \}$ (III)

et facultativement avec une proportion mineure d'unités récurrentes de la formule :

$\{ Ph^1 - O - Ph^1 - O - Ph^1 - SO_2 \}$ (IV)

cette proportion mineure étant une proportion molaire n'excédant pas 25 moles % du total des unités II et IV, où

$Ph^1$ est un cycle phénylène,

$Ph^2$ est un cycle phénylène portant un ou deux radicaux $-SO_3M$, où dans au moins certains des radicaux $-SO_3M$,

M est un métal divalent en une proportion suffisante pour la combinaison avec les valences non saturées des radicaux $-SO_3$,

caractérisé en ce que la polyaryléthersulfone sulfonée est mise à réagir avec un composé d'un métal divalent.

11. Procédé suivant la revendication 10, dans lequel le métal divalent est le baryum.

12. Solution comprenant un sel de métal divalent obtenu par le procédé suivant la revendication 10, dans un mélange de solvants contenant :

(a) un carbonate d'alcoylène,

(b) au moins un éther, et

(c) au moins un composé hydroxylé choisi entre $R^1COOH$ et $R^1OH$,

où

$R^1$ est un atome d'hydrogène ou un radical hydrocarbyle, la solubilité du sel dans chacun des

composants (a), (b) et (c), séparément, n'étant pas supérieure à 5% en poids, le sel étant présent dans le mélange de solvants en une quantité d'au moins 10% en poids et les composants (a), (b) et (c) étant tels qu'ils sont présents dans une phase unique et qu'aucun de ces composants ne réagit ni ne forme de complexes avec un autre de ces composants ou avec le sel.

**13.** Solution suivant la revendication 12, dans laquelle le mélange de solvants contient du carbonate de propylène, du 1,4-dioxanne et de l'eau.

**14.** Solution suivant la revendication 13, dans laquelle le mélange de solvants contient au moins 15% en poids de carbonate de propylène, au moins 15% en poids de 1,4-dioxanne et au maximum 25% en poids d'eau, les quantités totale des trois composants formant 100% en poids.

**15.** Procédé de production d'une solution suivant la revendication 12, qui comprend la dissolution d'une polyaryléthersulfone sulfonée, sous la forme acide, dans le mélange de solvants et la réaction de la solution résultante avec un composé du métal divalent, la polyaryléthersulfone sulfonée et le composé étant utilisés en quantités telles que dans la solution résultante, le sel soit présent en une concentration d'au moins 10% en poids.

**16.** Procédé de production d'une membrane, qui comprend la coulée d'un film sur un support par application sur celui-ci d'une solution suivant l'une quelconque des revendications 12 à 14, ou obtenue par un procédé suivant la revendication 15, l'immersion du film coulé dans un bain coagulant et le retrait de la membrane résultante hors du bain coagulant.

**17.** Procédé suivant la revendication 16, dans lequel le film coulé supporté est exposé à l'atmosphère pendant 10 secondes à 5 minutes et est immergé ensuite dans le bain coagulant.

**18.** Procédé de production d'une membrane sous la forme de fines fibres creuses, qui comprend l'extrusion à travers une filière comportant un mandrin central d'une solution suivant l'une quelconque des revendications 12 à 14 ou obtenue par le procédé suivant la revendication 15, l'évaporation d'une certaine quantité du solvant est permise, puis le passage des fibres résultantes dans un bain coagulant.

**19.** Procédé de dessalement de l'eau de mer ou de purification d'eaux saumâtres et d'effluents industriels, par exécution d'une osmose inverse ou d'une ultrafiltration au moyen d'une membrane suivant l'une quelconque des revendications 1 à 9 ou obtenue par le procédé suivant la revendication 16, 17 ou 18.

**20.** Appareil d'osmose inverse ou d'ultrafiltration dont la membrane est telle que revendiquée dans l'une quelconque des revendications 1 à 9 ou est telle qu'obtenue par le procédé suivant la revendication 16, 17 ou 18.

**Revendications pour l'Etat contractant suivant: AT**

**1.** Membrane semi-perméable asymétrique dans laquelle la couche de support et la couche active sont toutes deux formées de la même polyaryléthersulfone sulfonée et dans laquelle la membrane a une réjection du sel et un flux qui sont tels que le rapport :

$$\frac{\text{Flux (en m.jour}^{-1})}{(100 - \text{\% de réjection du sel})}$$

a une valeur d'au moins 0,05 lorsque la réjection du sel et le flux sont déterminés dans une cellule d'osmose inverse avec une solution aqueuse à 0,2% en poids de chlorure de sodium sous une pression de 40 bars et à une température de 25 °C,

caractérisée en ce que la polyaryléthersulfone sulfonée comprend des unités récurrentes de la formule :

$$-\!\!\left[\left(Ph - O\right)_m Ph - SO_2\right]\!\!- \quad (I)$$

où

Ph est un cycle phénylène et au moins certains des radicaux Ph sont sulfonés,
m est 1 ou 2 et la valeur de m peut différer le long de la chaîne du polymère, et
la polyaryléthersulfone sulfonée se trouve sous la forme d'un sel de métal divalent.

2. Membrane suivant la revendication 1, dans laquelle le rapport a une valeur d'au moins 0,2.

3. Membrane suivant la revendication 1, dans laquelle le rapport a une valeur de l'intervalle de 0,5 à 0,66.

4. Membrane suivant la revendication 3, dans laquelle la réjection du sel se situe dans l'intervalle de 97,3% à 98,8%.

5. Membrane suivant l'une quelconque des revendications précédentes, dont la polyaryléthersulfone sulfonée contient des unités récurrentes de la formule :

$$\left( Ph^1 - O - Ph^2 - O - Ph^1 - SO_2 \right) \quad (II)$$

conjointement avec des unités récurrentes de la formule :

$$\left( Ph^1 - O - Ph^1 - SO_2 - Ph^1 - O - Ph^1 - SO_2 \right) \quad (III)$$

et facultativement avec des unités récurrentes de la formule :

$$\left( Ph^1 - O - Ph^1 - O - Ph^1 - SO_2 \right) \quad (IV)$$

où

$Ph^1$ est un radical phénylène,
$Ph^2$ est un radical phénylène portant un ou deux radicaux $-SO_3M$, où
M est un métal divalent.

6. Membrane suivant la revendication 5, dans laquelle dans au moins certains des radicaux $-SO_3M$, M est un élément alcalino-terreux.

7. Membrane suivant la revendication 6, dans laquelle dans au moins certains des radicaux $-SO_3M$, M est le baryum.

8. Membrane suivant la revendication 5, dans laquelle M est le calcium ou le magnésium.

9. Membrane suivant l'une quelconque des revendications précédentes, qui se présente sous la forme de fines fibres creuses.

10. Procédé de production d'un sel de métal divalent d'une polyaryléthersulfone sulfonée contenant des unités récurrentes de la formule :

$$\left( Ph^1 - O - Ph^2 - O - Ph^1 - SO_2 \right) \quad (II)$$

conjointement avec des unités récurrentes de la formule :

$$\left( Ph^1 - O - Ph^1 - SO_2 - Ph^1 - O - Ph^1 - SO_2 \right) \quad (III)$$

et facultativement avec une proportion mineure d'unités récurrentes de la formule :

$$\left( Ph^1 - O - Ph^1 - O - Ph^1 - SO_2 \right) \quad (IV)$$

cette proportion mineure étant une proportion molaire n'excédant pas 25 moles % du total des unités II et IV, où

$Ph^1$ est un cycle phénylène,

$Ph^2$ est un cycle phénylène portant un ou deux radicaux $-SO_3M$, où dans au moins certains des radicaux $-SO_3M$,

M est un métal divalent en une proportion suffisante pour la combinaison avec les valences non saturées des radicaux $-SO_3$,

caractérisé en ce que la polyaryléthersulfone sulfonée est mise à réagir avec un composé d'un métal divalent.

**11.** Procédé suivant la revendication 10, dans lequel le métal divalent est le baryum.

**12.** Solution comprenant un sel de métal divalent obtenu par le procédé suivant la revendication 10, dans un mélange de solvants contenant :

(a) un carbonate d'alcoylène,

(b) au moins un éther, et

(c) au moins un composé hydroxylé choisi entre $R^1COOH$ et $R^1OH$,

où

$R^1$ est un atome d'hydrogène ou un radical hydrocarbyle, la solubilité du sel dans chacun des composants (a), (b) et (c), séparément, n'étant pas supérieure à 5% en poids, le sel étant présent dans le mélange de solvants en une quantité d'au moins 10% en poids et les composants (a), (b) et (c) étant tels qu'ils sont présents dans une phase unique et qu'aucun de ces composants ne réagit ni ne forme de complexes avec un autre de ces composants ou avec le sel.

**13.** Solution suivant la revendication 12, dans laquelle le mélange de solvants contient du carbonate de propylène, du 1,4-dioxanne et de l'eau.

**14.** Solution suivant la revendication 13, dans laquelle le mélange de solvants contient au moins 15% en poids de carbonate de propylène, au moins 15% en poids de 1,4-dioxanne et au maximum 25% en poids d'eau, les quantités totale des trois composants formant 100% en poids.

**15.** Procédé de production d'une solution suivant la revendication 12, qui comprend la dissolution d'une polyaryléthersulfone sulfonée, sous la forme acide, dans le mélange de solvants et la réaction de la solution résultante avec un composé du métal divalent, la polyaryléthersulfone sulfonée et le composé étant utilisés en quantités telles que dans la solution résultante, le sel soit présent en une concentration d'au moins 10% en poids.

**16.** Procédé de production d'une membrane, qui comprend la coulée d'un film sur un support par application sur celui-ci d'une solution suivant l'une quelconque des revendications 12 à 14, ou obtenue par un procédé suivant la revendication 15, l'immersion du film coulé dans un bain coagulant et le retrait de la membrane résultante hors du bain coagulant.

**17.** Procédé suivant la revendication 16, dans lequel le film coulé supporté est exposé à l'atmosphère pendant 10 secondes à 5 minutes et est immergé ensuite dans le bain coagulant.

**18.** Procédé de production d'une membrane sous la forme de fines fibres creuses, qui comprend l'extrusion à travers une filière comportant un mandrin central d'une solution suivant l'une quelconque des revendications 12 à 14 ou obtenue par le procédé suivant la revendication 15, l'évaporation d'une certaine quantité du solvant est permise, puis le passage des fibres résultantes dans un bain coagulant.

**19.** Procédé de dessalement de l'eau de mer ou de purification d'eaux saumâtres et d'effluents industriels, par exécution d'une osmose inverse ou d'une ultrafiltration au moyen d'une membrane suivant l'une quelconque des revendications 1 à 9 ou obtenue par le procédé suivant la revendication 16, 17 ou 18.

**20.** Appareil d'osmose inverse ou d'ultrafiltration dont la membrane est telle que revendiquée dans l'une quelconque des revendications 1 à 9 ou est telle qu'obtenue par le procédé suivant la revendication 16, 17 ou 18.

**Patentansprüche**
**Patentansprüche für folgende Vertragsstaaten: BE, CH, DE, FR, GB, IT, LU, NL, SE**

**1.** Asymmetrische semipermeable Membran, bei der die Trägerschicht und die aktive Schicht aus demselben sulfonierten Polyarylethersulfon gebildet sind, wobei die Membran eine Salzretention und einen Durchfluß hat, die derart sind, daß das Verhältnis:

$$\frac{\text{Durchfluß (in m·Tag}^{-1}\text{)}}{\text{(100 - \% Salzretention)}}$$

einen Wert von mindestens 0,05 hat, wenn die Salzretention und der Durchfluß in einer Zelle für umgekehrte Osmose unter Verwendung einer 0,2%igen (Masse%) wäßrigen Lösung von Natriumchlorid bei einem Druck von 40 bar und einer Temperatur von 25 °C bestimmt werden,

**dadurch gekennzeichnet,** daß das sulfonierte Polyarylethersulfon Repetiereinheiten der Formel:

I $$-[-(Ph-O)_m-Ph-SO_2-]-$$

enthält, worin

Ph ein Phenylenring ist und mindestens einige der Gruppen Ph sulfoniert sind;

m 1 oder 2 ist und der Wert von m entlang der Polymerkette verschieden sein kann und

das sulfonierte Polyarylethersulfon in Form eines Salzes eines zweiwertigen Metalls vorhanden ist.

**2.** Membran nach Anspruch 1, bei der das erwähnte Verhältnis einen Wert von mindestens 0,2 hat.

**3.** Membran nach Anspruch 1, bei der das erwähnte Verhältnis einen Wert in dem Bereich von 0,5 bis 0,66 hat.

**4.** Membran nach Anspruch 3, bei der die Salzretention in dem Bereich von 97,3 % bis 98,8 % liegt.

**5.** Membran nach einem der vorhergehenden Ansprüche, deren sulfoniertes Polyarylethersulfon Repetiereinheiten der Formel:

(II) $-(Ph^1-O-Ph^2-O-Ph^1-SO_2)-$

zusammen mit Repetiereinheiten der Formel:

(III) $-(Ph^1-O-Ph^1-SO_2-Ph^1-O-Ph^1-SO_2)-$

und wahlweise mit Repetiereinheiten der Formel:

(IV) $-(Ph^1-O-Ph^1-O-Ph^1-SO_2)-$

enthält, worin
$Ph^1$ ein Phenylenring ist und
$Ph^2$ ein Phenylenring mit einer oder zwei Gruppen $-SO_3M$ ist, worin
M ein zweiwertiges Metall ist.

**6.** Membran nach Anspruch 5, bei der M mindestens in einigen der $-SO_3M$-Gruppen ein Erdalkalielement ist.

**7.** Membran nach Anspruch 6, bei der M mindestens in einigen der $-SO_3M$-Gruppen Barium ist.

**8.** Membran nach Anspruch 5, bei der M Calcium oder Magnesium ist.

**9.** Membran nach einem der vorhergehenden Ansprüche, die in Form von feinen Hohlfasern vorhanden ist.

**10.** Salz eines sulfonierten Polyarylethersulfons, das Repetiereinheiten der Formel:

(II) $\{Ph^1\text{-O-}Ph^2\text{-O-}Ph^1\text{-}SO_2\}$

zusammen mit den Repetiereinheiten der Formel:

(III) $\{Ph^1\text{-O-}Ph^1\text{-}SO_2\text{-}Ph^1\text{-O-}Ph^1\text{-}SO_2\}$

und wahlweise mit einem kleineren Anteil von Repetiereinheiten der Formel:

(IV) $\{Ph^1\text{-O-}Ph^1\text{-O-}Ph^1\text{-}SO_2\}$

enthält, wobei der kleinere Anteil ein molarer Anteil von nicht mehr als 25 Mol% der Gesamtmenge der Einheiten II und IV ist, worin

$Ph^1$ einen Phenylenring bedeutet;

$Ph^2$ einen Phenylenring mit einer oder zwei Gruppen $-SO_3M$ bedeutet, wobei mindestens in einigen der Gruppen $-SO_3M$

M ein zweiwertiges Metall in einem Anteil ist, der ausreicht, um sich mit den ungesättigten Valenzen der Gruppen $-SO_3$ zu verbinden.

**11.** Salz nach Anspruch 10, bei dem M Barium ist.

**12.** Lösung, bestehend aus einem Salz nach Ansprüchen 10 bis 11 in einer Lösungsmittelmischung, die
(a) mindestens ein Alkylencarbonat,
(b) mindestens einen Ether und
(c) mindestens eine Hydroxylverbindung, die aus $R^1COOH$ und $R^1OH$, worin $R^1$ ein Wasserstoffatom oder eine Hydrocarbylgruppe ist, ausgewählt ist,

enthält, wobei die Löslichkeit des Salzes in jedem der Bestandteile (a), (b) und (c) getrennt nicht mehr als 5 Masse% beträgt, das Salz in der Lösungsmittelmischung in einer Menge von mindestens 10 Masse% vorhanden ist und die Bestandteile (a), (b) und (c) derart sind, daß sie in einer einzigen Phase vorhanden sind und keiner der erwähnten Bestandteile mit einem anderen der erwähnten Bestandteile oder mit dem Salz reagiert oder einen Komplex bildet.

**13.** Lösung nach Anspruch 12, bei der die Lösungsmittelmischung Propylencarbonat, 1,4-Dioxan und Wasser enthält.

**14.** Lösung nach Anspruch 13, bei der die Lösungsmittelmischung mindestens 15 Masse% Propylencarbonat, mindestens 15 Masse% 1,4-Dioxan und nicht mehr als 25 Masse% Wasser enthält, wobei die Gesamtmenge der drei Bestandteile 100 Masse% beträgt.

**15.** Verfahren zur Herstellung einer Lösung nach Anspruch 12, bei dem ein sulfoniertes Polyarylethersulfon in der Säureform in der Lösungsmittelmischung gelöst wird und die erhaltene Lösung mit einer Verbindung des zweiwertigen Metalls zur Reaktion gebracht wird, wobei das sulfonierte Polyarylethersulfon und die erwähnte Verbindung in derartigen Mengen verwendet werden, daß das Salz in der erhaltenen Lösung in einer Konzentration von mindestens 10 Masse% vorhanden ist.

**16.** Verfahren zur Herstellung einer Membran, bei dem ein Film auf einen Träger gegossen wird, indem darauf eine Lösung nach einem der Ansprüche 12 bis 14 oder eine durch ein Verfahren nach Anspruch 15 erhaltene Lösung aufgetragen wird, der gegossene Film in ein Koagulationsbad eingetaucht wird und die erhaltene Membran aus dem Koagulationsbad gewonnen wird.

**17.** Verfahren nach Anspruch 16, bei dem der gegossene Film, der sich auf dem Träger befindet, 10 s bis 5 min lang der Atmosphäre ausgesetzt und dann in das Koagulationsbad eingetaucht wird.

**18.** Verfahren zur Herstellung einer Membran in Form feiner Hohlfasern, bei dem eine Lösung nach einem der Ansprüche 12 bis 14 oder eine durch das Verfahren nach Anspruch 15 erhaltene Lösung durch ein Mundstück mit einem zentralen Dorn extrudiert wird, etwas von dem Lösungsmittel verdampfen gelassen wird und die erhaltenen Fasern dann durch ein Koagulationsbad hindurchgehen gelassen werden.

**19.** Verfahren zur Entsalzung von Meerwasser oder zur Reinigung von Brackwässern und Industrieabwässern mittels Durchführung einer umgekehrten Osmose oder einer Ultrafiltration unter Verwendung einer Membran nach einem der Ansprüche 1 bis 9 oder einer durch das Verfahren nach Anspruch 16, 17 oder 18 erhaltenen Membran.

**20.** Vorrichtung für umgekehrte Osmose oder Ultrafiltration, deren Membran eine Membran nach einem der Ansprüche 1 bis 9 oder eine durch das Verfahren nach Anspruch 16, 17 oder 18 erhaltene Membran ist.

**Patentansprüche für folgende Vertragsstaat: AT**

**1.** Asymmetrische semipermeable Membran, bei der die Trägerschicht und die aktive Schicht aus demselben sulfonierten Polyarylethersulfon gebildet sind, wobei die Membran eine Salzretention und einen Durchfluß hat, die derart sind, daß das Verhältnis:

$$\frac{\text{Durchfluß (in m·Tag}^{-1}\text{)}}{\text{(100 - \% Salzretention)}}$$

einen Wert von mindestens 0,05 hat, wenn die Salzretention und der Durchfluß in einer Zelle für umgekehrte Osmose unter Verwendung einer 0,2%igen (Masse%) wäßrigen Lösung von Natriumchlorid bei einem Druck von 40 bar und einer Temperatur von 25 °C bestimmt werden,

**dadurch gekennzeichnet,** daß das sulfonierte Polyarylethersulfon Repetiereinheiten der Formel:

I $$-\!\!\left[\left(Ph-O\right)_m - Ph-SO_2\right]\!\!-$$

enthält, worin

Ph ein Phenylenring ist und mindestens einige der Gruppen Ph sulfoniert sind;

m 1 oder 2 ist und der Wert von m entlang der Polymerkette verschieden sein kann und

das sulfonierte Polyarylethersulfon in Form eines Salzes eines zweiwertigen Metalls vorhanden ist.

**2.** Membran nach Anspruch 1, bei der das erwähnte Verhältnis einen Wert von mindestens 0,2 hat.

**3.** Membran nach Anspruch 1, bei der das erwähnte Verhältnis einen Wert in dem Bereich von 0,5 bis 0,66 hat.

**4.** Membran nach Anspruch 3, bei der die Salzretention in dem Bereich von 97,3 % bis 98,8 % liegt.

**5.** Membran nach einem der vorhergehenden Ansprüche, deren sulfoniertes Polyarylethersulfon Repetiereinheiten der Formel:

(II) $\left( Ph^1\text{-}O\text{-}Ph^2\text{-}O\text{-}Ph^1\text{-}SO_2 \right)$

zusammen mit Repetiereinheiten der Formel:

(III) $\left( Ph^1\text{-}O\text{-}Ph^1\text{-}SO_2\text{-}Ph^1\text{-}O\text{-}Ph^1\text{-}SO_2 \right)$

und wahlweise mit Repetiereinheiten der Formel:

(IV) $\{Ph^1\text{-O-}Ph^1\text{-O-}Ph^1\text{-}SO_2\}$

enthält, worin
$Ph^1$ ein Phenylenring ist und
$Ph^2$ ein Phenylenring mit einer oder zwei Gruppen $-SO_3M$ ist, worin
M ein zweiwertiges Metall ist.

**6.** Membran nach Anspruch 5, bei der M mindestens in einigen der $-SO_3M$-Gruppen ein Erdalkalielement ist.

**7.** Membran nach Anspruch 6, bei der M mindestens in einigen der $-SO_3M$-Gruppen Barium ist.

**8.** Membran nach Anspruch 5, bei der M Calcium oder Magnesium ist.

**9.** Membran nach einem der vorhergehenden Ansprüche, die in Form von feinen Hohlfasern vorhanden ist.

**10.** Verfahren zur Herstellung eines Salzes eines zweiwertigen Metalls mit einem sulfonierten Polyarylethersulfon, das Repetiereinheiten der Formel:

(II) $\{Ph^1\text{-O-}Ph^2\text{-O-}Ph^1\text{-}SO_2\}$

zusammen mit den Repetiereinheiten der Formel:

(III) $\{Ph^1\text{-O-}PH^1\text{-}SO_2\text{-}Ph^1\text{-O-}Ph^1\text{-}SO_2\}$

und wahlweise mit einem kleineren Anteil von Repetiereinheiten der Formel:

(IV) $\{Ph^1\text{-O-}Ph^1\text{-O-}Ph^1\text{-}SO_2\}$

enthält, wobei der kleinere Anteil ein molarer Anteil von nicht mehr als 25 Mol% der Gesamtmenge der Einheiten II und IV ist, worin
$Ph^1$ einen Phenylenring bedeutet;
$Ph^2$ einen Phenylenring mit einer oder zwei Gruppen $-SO_3M$ bedeutet, wobei mindestens in einigen der Gruppen $-SO_3M$
M ein zweiwertiges Metall in einem Anteil ist, der ausreicht, um sich mit den ungesättigten Valenzen der Gruppen $-SO_3$ zu verbinden,

dadurch gekennzeichnet, daß das sulfonierte Polyarylethersulfon mit einer Verbindung eines zweiwertigen Metalls zur Reaktion gebracht wird.

**11.** Verfahren nach Anspruch 10, bei dem das zweiwertige Metall Barium ist.

**12.** Lösung, bestehend aus einem durch das Verfahren nach Anspruch 10 erhaltenen Salz eines zweiwertigen Metalls in einer Lösungsmittelmischung, die
(a) mindestens ein Alkylencarbonat,
(b) mindestens einen Ether und
(c) mindestens eine Hydroxylverbindung, die aus $R^1COOH$ und $R^1OH$, worin $R^1$ ein Wasserstoffatom oder eine Hydrocarbylgruppe ist, ausgewählt ist,
enthält, wobei die Löslichkeit des Salzes in jedem der Bestandteile (a), (b) und (c) getrennt nicht mehr als 5 Masse% beträgt, das Salz in der Lösungsmittelmischung in einer Menge von mindestens 10 Masse% vorhanden ist und die Bestandteile (a), (b) und (c) derart sind, daß sie in einer einzigen Phase vorhanden sind und keiner der erwähnten Bestandteile mit einem anderen der erwähnten Bestandteile oder mit dem Salz reagiert oder einen Komplex bildet.

**13.** Lösung nach Anspruch 12, bei der die Lösungsmittelmischung Propylencarbonat, 1,4-Dioxan und

Wasser enthält.

**14.** Lösung nach Anspruch 13, bei der die Lösungsmittelmischung mindestens 15 Masse% Propylencarbonat, mindestens 15 Masse% 1,4-Dioxan und nicht mehr als 25 Masse% Wasser enthält, wobei die Gesamtmenge der drei Bestandteile 100 Masse% beträgt.

**15.** Verfahren zur Herstellung einer Lösung nach Anspruch 12, bei dem ein sulfoniertes Polyarylethersulfon in der Säureform in der Lösungsmittelmischung gelöst wird und die erhaltene Lösung mit einer Verbindung des zweiwertigen Metalls zur Reaktion gebracht wird, wobei das sulfonierte Polyarylethersulfon und die erwähnte Verbindung in derartigen Mengen verwendet werden, daß das Salz in der erhaltenen Lösung in einer Konzentration von mindestens 10 Masse% vorhanden ist.

**16.** Verfahren zur Herstellung einer Membran, bei dem ein Film auf einen Träger gegossen wird, indem darauf eine Lösung nach einem der Ansprüche 12 bis 14 oder eine durch ein Verfahren nach Anspruch 15 erhaltene Lösung aufgetragen wird, der gegossene Film in ein Koagulationsbad eingetaucht wird und die erhaltene Membran aus dem Koagulationsbad gewonnen wird.

**17.** Verfahren nach Anspruch 16, bei dem der gegossene Film, der sich auf dem Träger befindet, 10 s bis 5 min lang der Atmosphäre ausgesetzt und dann in das Koagulationsbad eingetaucht wird.

**18.** Verfahren zur Herstellung einer Membran in Form feiner Hohlfasern, bei dem eine Lösung nach einem der Ansprüche 12 bis 14 oder eine durch das Verfahren nach Anspruch 15 erhaltene Lösung durch ein Mundstück mit einem zentralen Dorn extrudiert wird, etwas von dem Lösungsmittel verdampfen gelassen wird und die erhaltenen Fasern dann durch ein Koagulationsbad hindurchgehen gelassen werden.

**19.** Verfahren zur Entsalzung von Meerwasser oder zur Reinigung von Brackwässern und Industrieabwässern mittels Durchführung einer umgekehrten Osmose oder einer Ultrafiltration unter Verwendung einer Membran nach einem der Ansprüche 1 bis 9 oder einer durch das Verfahren nach Anspruch 16, 17 oder 18 erhaltenen Membran.

**20.** Vorrichtung für umgekehrte Osmose oder Ultrafiltration, deren Membran eine Membran nach einem der Ansprüche 1 bis 9 oder eine durch das Verfahren nach Anspruch 16, 17 oder 18 erhaltene Membran ist.

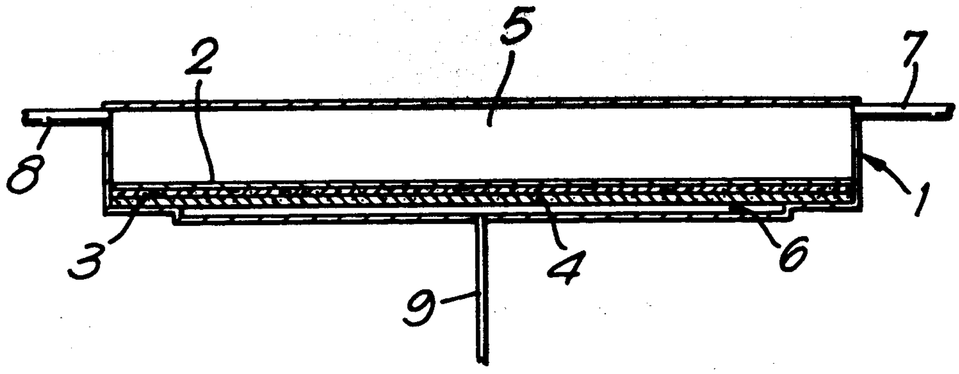
5
7
2
8
1
3
4
6
9